# EUROPÄISCHE PATENTSCHRIFT

(11) **EP 1 682 382 B1**
(45) Veröffentlichungstag und Bekanntmachung des Hinweises auf die Patenterteilung: **18.04.2007**
(21) Anmeldenummer: 04790974.2
(22) Anmeldetag: 28.10.2004
(51) Int. Cl.: B60R 1/06

(54) **AUSSENRÜCKSPIEGEL FÜR EIN KRAFTFAHRZEUG**
EXTERIOR REARVIEW MIRROR FOR A MOTOR VEHICLE
RETROVISEUR EXTERIEUR POUR VEHICULES AUTOMOBILES

(30) Priorität: 13.11.2003 DE 10353022
(43) Veröffentlichungstag der Anmeldung: 26.07.2006
(73) Patentinhaber: DaimlerChrysler AG, 70327 Stuttgart (DE)
(72) Erfinder: BOLL, Wolf, 71384 Weinstadt (DE)
(86) Internationale Anmeldenummer: PCT/EP2004/012204
(87) Internationale Veröffentlichungsnummer: WO 2005/047060

(56) Entgegenhaltungen:
- US-A- 4 763 381
- US-A- 5 760 956
- US-B1- 6 343 402

## Beschreibung

Die vorliegende Erfindung betrifft einen Außenrückspiegel für ein Kraftfahrzeug gemäß dem Oberbegriff des Anspruchs 1.

Aus der DE 199 38 028 A1 ist ein Außenrückspiegel für ein Kraftfahrzeug mit einem Spiegelgehäuse und einem Wischermotor bekannt. Zum Reinigen einer Spiegeloberfläche des Außenrückspiegels ist ein vom Wischermotor über eine Wischermechanik angetriebener Wischerarm vorgesehen, welcher ein Wischblatt trägt. Dabei ist die Wischermechanik so ausgebildet, dass das Wischblatt eine im wesentlichen parallele Hin- und Herbewegung ausführt. Der bekannte Außenrückspiegel ermöglicht durch die beschriebene Wischertechnik ein Entfernen von Feuchtigkeit und Schmutz von der Spiegeloberfläche und gewährleistet somit eine stets gute Sicht durch den Außenrückspiegel auf rückliegende Bereiche des Kraftfahrzeugs.

Aus der DE 32 11 794 C2 ist ein weiterer Außenrückspiegel für Kraftfahrzeuge bekannt. Dieser eignet sich insbesondere für Lastkraftwagen und ermöglicht dem Fahrer eine optimale Sicht auf das Geschehen hinter ihm. Durch eine kompakte Bauweise kann das Spiegelgehäuse dabei klein gehalten werden. Außerdem kann der Außenrückspiegel mit einer Scheibenwischanlage ausgerüstet sein, wobei nur ein einziger Motor benötigt wird, um das Spiegelgehäuse bzw. die Spiegelscheibe zwischen der Normalstellung und einer Blickfeld erweiternden Stellung hin und her zu schwenken oder die Spiegelscheibe mit dem Scheibenwischer zu reinigen. Die Spiegelwischanlage weist ein gerades Wischerblatt auf, das an einem Parallelogrammgelenkhebelsystem angelenkt ist. Das Parallelogrammgelenkhebelsystem ermöglicht dabei eine parallele Wischbewegung des Wischblattes und somit eine gute Reinigung der Spiegeloberfläche von Feuchtigkeit und Schmutz.

Aus der DE 199 00 408 A1 ist ein weiterer Außenspiegel für ein Fahrzeug bekannt. Der Außenspiegel ist mit einer Wisch-Waschanlage versehen, welche aus einem Wischermotor und einem Wischerarm, an dem ein Wischblatt und Spritzdüsen befestigt sind, besteht. Der Wischermotor ist dabei entweder über dem oberen, unteren oder seitlich rechten oder linken Bereich des Außenspiegels angeordnet. Es ist möglich, die Wisch-Waschanlage als Zusatzteil an vorhandenen Anlagen nachzurüsten. Die Bedienelemente für die in Betriebnahme der Wisch-Waschanlage sind wahlweise mit den Bedienelementen einer vorhandenen Scheibenwisch-Waschanlage gekoppelt oder separat geschaltet. Dies betrifft sowohl die Zuführung von Elektroenergie aus der Bordanlage, als auch die Zuführung von Waschwasser aus einem bereits vorhandenen oder separat anzubringenden Voratsbehälter. Weiterhin ist der Wischerarm, der Abmessung des Außenspiegels rechnungtragend, mit einem Gelenk versehen. Die vom Wischerarm bzw. dem Wischblatt ausgeführte Wischbewegung ist dabei jedoch eine Drehschwenkbewegung und keine Parallelbewegung.

Aus der US-A-5760956 ist noch ein weiterer Außenrückspiegel für ein Kraftfahrzeug bekannt,
- mit einem Spiegelgehäuse und einem Wischermotor,
- mit einem vom Wischermotor über eine Wischermechanik angetriebenen Wischerarm, der zur Reinigung einer Spiegeloberfläche ein Wischblatt trägt,
- wobei die Wischermechanik eine im wesentlichen parallele Hin- und Herbewegung des Wischerblatts erzeugt,
- wobei die Wischermechanik einen ersten und einen zweiten L-förmigen Schwenkarm aufweist, welche jeweils an ihrem Knie ortsfest drehbar gelagert sind.

Die vorliegende Erfindung beschäftigt sich mit dem Problem, für einen Außenrückspiegel eingangs erwähnter Art eine verbesserte Ausführungsform anzugeben, welche insbesondere eine besonders kompakte Bauweise aufweist und darüber hinaus eine hohe Widerstandsfähigkeit gegen Verschmutzung bzw. Vereisung besitzt.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einem Außenrückspiegel für ein Kraftfahrzeug mit einem Spiegelgehäuse und einem Wischermotor sowie einem vom Wischermotor über eine Wischermechanik angetriebenen Wischerarm eine Drehgelenkmechanik als Wischermechanik zu verwenden, welche in das Wischergehäuse integriert ist.

Die Wischermechnik des erfindungsgemäßen Parallelwischers weist dazu einen ersten und einen zweiten L-förmigen Schwenkarm auf, welche jeweils an ihrem Knie ortsfest, beispielsweise am Spiegelgehäuse, drehbar gelagert sind. Beide Schwenkarme sind jeweils am kniefernen Ende ihres wischerseitigen Schenkels drehbar an einem inneren Parallelwischerarm gelagert und über diesen miteinander verbunden. Am inneren Parallelwischerarm ist, insbesondere über ein Federgelenk, ein äu-ßerer Parallelwischerarm angeordnet, welcher das Wischblatt trägt. Antriebsseitig sind die Schwenkarme an ihren antriebsseitigen Schenkeln mit dem Wischermotor verbunden.

Durch die erfindungsgemäße Lösung kann somit in einfacher Weise eine Wischeranordnung realisiert werden, welche relativ unempfindlich gegen Verschmutzung oder Vereisung ist und darüber hinaus eine besonders geringe Baubreite bzw. Bautiefe ermöglicht. Hierzu sind parallel zum inneren Parallelwischerarm die beiden Schwenkarme übereinander liegend angeordnet und antriebsseitig, beispielsweise über eine Pendelstange, mit dem Wischermotor verbunden und abtriebsseitig gelenkig am inneren Parallelwischerarm gelagert.

Gemäß einer bevorzugten Ausführungsform ist zwischen dem inneren und dem äußeren Parallelwischerarm ein Federgelenk angeordnet, das so ausgebildet ist, dass es das Wischblatt gegen die Spiegeloberfläche drückt. Hierdurch wird gewährleistet, dass kleinere Verunreinigungen, wie beispielsweise Schmutzpartikel zuverlässig von der Spiegeloberfläche entfernt werden. Zudem wird ein Verschmieren und damit eine Verschlechterung der Sicht dadurch vermieden, dass das Federgelenk einen definierten Anpressdruck auf das Wischblatt erzeugt.

Zweckmäßig kann einer der Parallelwischerarme die Spiegelfläche randseitig umgreifen. Hierdurch ist von außen nichts von der Wischermechanik zu sehen, was zum einen designerische Vorteile bietet und zum anderen die Wischermechanik vor Verschmutzung und im gewissen Umfang auch vor Vereisung schützt. Im Nichtgebrauchszustand liegt das Wischblatt günstigenfalls randseitig der Spiegelfläche an, so dass eine maximale Spiegeloberfläche zum Beobachten des rückwärtigen Raums zur Verfügung steht.

Gemäß einer vorteilhaften Weiterbildung ist die Wischermechanik an einem Träger befestigt, welcher gleichzeitig die Spiegelfläche trägt. Dies gewährleistet, dass sich eine Position des Wischblattes relativ zur Spiegeloberfläche auch beim Verstellen des Spiegels nicht verändert und somit eine konstant hohe Wischqualität erzielt werden kann.

Gemäß einer weiteren besonderen Ausführungsform der Erfindung weist der Außenrückspiegel eine Wascheinrichtung auf. Eine derartige Wascheinrichtung, welche beispielsweise beheizt ist, ermöglicht es, eine verschmutzte Spiegeloberfläche zuverlässig zu reinigen und dadurch die Fahrsicherheit zu erhöhen. Denkbar ist hierbei, dass die Wascheinrichtung so ausgebildet ist, dass sie nur in Bewegungsrichtung vor das Wischblatt Waschflüssigkeit auf die Spiegeloberfläche spritzt. Hierdurch kann die auf der Spiegeloberfläche anhaftende Verschmutzung zuerst angefeuchtet werden und anschließend durch das Wischblatt entfernt werden. Gleichzeitig wird hierdurch gewährleistet, dass nach einer Beendigung des Wischvorganges keine Waschflüssigkeit mehr auf der Spiegeloberfläche verbleibt und dadurch nach dem Abschalten der Wisch-Waschanlage immer eine gereinigte und gewischte Spiegeloberfläche vorhanden ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Dabei zeigen:
- Fig. 1: eine Ansicht auf einen erfindungsgemäßen Außenrückspiegel,
- Fig. 2: einen Längsschnitt durch den Außenrückspiegel mit innenliegender Wischermechanik,
- Fig. 3: eine Detailansicht der erfindungsgemäßen Wischermechanik.

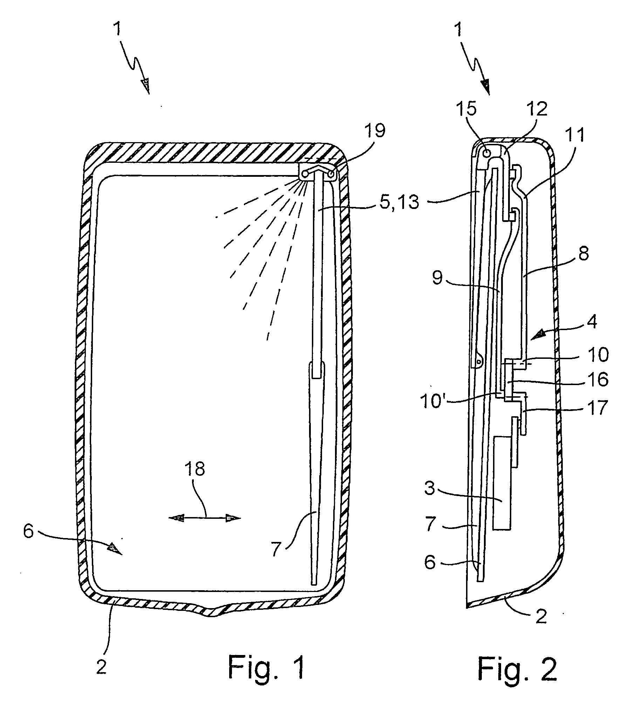

Entsprechend Fig. 1 weist ein Außenrückspiegel 1 für ein Kraftfahrzeug, insbesondere für ein Nutzfahrzeug, ein Spiegelgehäuse 2 sowie einen entlang einer Wischrichtung 18 angetriebenen Wischerarm 5 auf. Der Wischerarm 5 trägt zur Reinigung einer Spiegeloberfläche 6 ein Wischblatt 7.

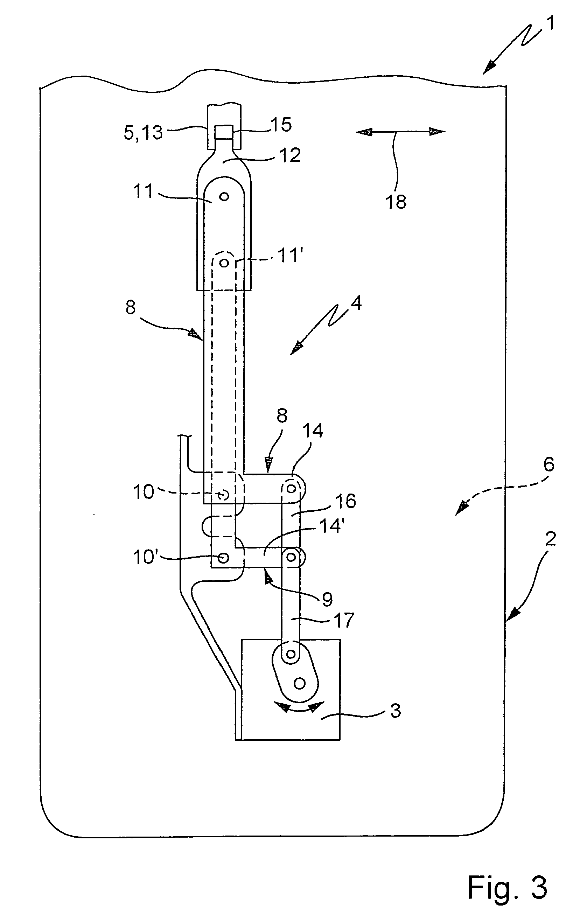

Die Wischbewegung entlang der Wischrichtung 18 wird über eine Wischermechnik 4 (vgl. Fig. 2 und 3) erreicht, welche eingangsseitig von einem ebenfalls in Fig. 2 und Fig. 3 gezeigten Wischermotor 3 angetrieben wird. Die Wischermechanik 4 ist dabei so ausgebildet, dass sie im wesentlichen parallele Hin- und Herbewegungen des Wischblattes 7 entlang der Wischrichtung 18 erzeugt.

Gemäß Fig. 1 kann vorgesehen sein, dass der Außenrückspiegel 1 eine Wascheinrichtung aufweist, welche über eine Waschdüse 19 Waschflüssigkeit auf die Spiegeloberfläche 6 spritzt. Günstigerweise besitzt die Wascheinrichtung dabei zwei Waschdüsen 19 bzw. eine zweigeteilte Waschdüse 19, welche jeweils nur in Bewegungsrichtung vor das Wischblatt 7 Waschflüssigkeit auf die Spiegeloberfläche 6 spritzt, so dass nach Abschalten des Wischermotors 3 eine stets gereinigte und gewischte Spiegeloberfläche 6 zurückbleibt.

Desweiteren ist denkbar, dass der Außenrückspiegel 1 elektrisch verstellbar und/oder elektrisch beheizbar ausgebildet ist. Eine elektrische Verstellbarkeit erhöht dabei den Bedienkomfort und gleichzeitig die Fahrsicherheit durch einfach einzustellende und damit stets richtig eingestellte Außenrückspiegel 1. Beheizte Außenrückspiegel 1 ermöglichen darüber hinaus auch in den Wintermonaten eine stets klare Spiegeloberfläche 6 sowie eine leichtgängige und nicht durch Vereisung beeinträchtigte Wischermechanik 4.

Entsprechend den Fig. 2 und 3 weist die Wischermechanik 4 einen ersten L-förmigen Schwenkarm 8 und einen zweiten L-förmigen Schwenkarm 9 auf, welche jeweils an ihrem Knie 10 bzw. 10' ortsfest drehbar gelagert sind. Sowohl der erste Schwenkarm 8 als auch der zweite Schwenkarm 9 sind an ihrem wischerseitigen Schenkel 11, 11' drehbar an einem inneren Parallelwischerarm 12 gelagert. Durch eine simultane Verdrehung der beiden Schwenkarme 8 und 9 um ihre Drehlagerung am jeweiligen Knie 10 und 10' erfolgt somit ein Verschwenken der jeweiligen wischerseitigen Schenkel 11 und 11' und damit eine Parallelverschwenkung des inneren Parallelwischerarmes 12 entlang der Wischrichtung 18. An einem von den Schenkeln 11 und 11' abgewandten Ende des inneren Parallelwischerarms 12 ist an diesem ein äußerer Parallelwischerarm 13 angeordnet (Fig. 2), welcher das Wischblatt 7 trägt und welcher einen von außen sichtbaren Teil der Wisch-Waschanlage des Außenrückspiegels 1 darstellt.

Zwischen dem inneren Parallwischerarm 12 und dem äußeren Parallelwischerarm 13 ist gemäß Fig. 2 ein Federgelenk 15 angeordnet, welches zum einen ein Abklappen des äußeren Parallelwischerarms 13 erlaubt und zum anderen das Wischblatt 7 gegen die Spiegeloberfläche 6 drückt und damit einen gleichbleibend hohen Wischkontakt erzeugt. Im abgeklappten Zustand kann das Wischblatt 7 ähnlich wie bei herkömmlichen Scheibenwischern problemlos ausgetauscht werden. Im angeklappten Zustand bilden der innere Parallelwischerarm 12 und der äußerer Parallelwischerarm 13 eine u-förmige Umgreifung eines nicht näher bezeichneten Randes der Spiegeloberfläche 6.

Antriebsseitig sind die beiden Schwenkarme 8 und 9 gemäß Fig. 3 an ihren antriebsseitigen Schenkeln 14 und 14' über eine Koppelstange 16 miteinander gekoppelt. Am antriebsseitigen Schenkel 14' des Schwenkarmes 9 ist dieser über eine Pendelstange 17 mit dem Wischermotor 3 verbunden.

Der Wischermotor 3 kann dabei eine stetige Drehbewegung oder eine oszillierende Bewegung ausführen und damit ein Verstellen des Wischblattes 7 entlang der Wischrichtung 18 bewirken. Durch die Koppelstange 16 ist eine stets gleichförmige Bewegung der beiden L-förmigen Schenkel 8 und 9 gewährleistet.

Gemäß den Fig. 2 und 3 sind die beiden L-förmigen Schwenkarme 8 und 9 im wesentlich parallel und drehachsenversetzt zueinander angeordnet. Dabei ist das Knie 10' des zweiten Schwenkarmes 9 entlang des wischerseitigen Schenkels 11 des ersten Schwenkarmes 8 verschoben. Die verschobene Anordnung der beiden Schwenkarme 8 und 9 ist dabei auf eine Grundstellung bezogen, in welcher der wischerseitige Schenkel 11 des ersten Schwenkarmes 8 im wesentlichen denkungsgleich mit dem wischerseitigen Schenkel 11' des zweiten Schwenkarmes 9 angeordnet ist.

Generell kann vorgesehen sein, dass die Wischermechanik 4 an einem Träger befestigt ist, welcher gleichzeitig die Spiegelfläche 6 trägt, so dass bei einem Justieren des Außenrückspiegels gleichzeitig die Wischermechanik 4 mit verstellt wird. Dies bietet den großen Vorteil, dass die Wischermechanik 4 und damit auch der äußere Parallelwischerarm 13 mit dem daran angeordneten Wischblatt 7 positionstreu zur Spiegeloberfläche 6 gelagert sind. Denkbar ist aber auch, dass die Wischermechanik 4 am Spiegelgehäuse 2 befestigt ist, und somit bei einem Justieren des Außenrückspiegels 1 nicht die Bewegung der Spiegeloberfläche 6 mitmacht. Sowohl bei der Ausführungsform mit am Träger angeordneter Wischermechanik 4 als auch mit am Spiegelgehäuse 2 angeordneter Wischermechanik 4 wird eine gute Wischqualität erzielt, da im ersten Fall das Wischblatt 7 immer die optimale Stellung zur Spiegeloberfläche 6 einnehmen kann und im zweiten Fall die Lageänderungen zwischen Wischblatt 7 und Spiegeloberfläche 6 bei Bussen und/oder Nutzfahrzeugen erstens sehr gering sind und zweitens durch ein nicht näher bezeichnetes Gelenk zwischen Wischblatt 7 und äußeren Parallwischerarm 13 ausgeglichen werden können.

Mit der erfindungsgemäßen Lösung wird somit durch eine als Drehgelenkmechanik ausgebildete Wischermechanik 4 in konstruktiv einfacher Weise eine kompakte Anordnung der Wischermechnik 4 innerhalb des Spiegelgehäuses 2 erreicht, so dass diese geschützt vor Verschmutzung und optisch unauffällig untergebracht ist.

Zusammenfassend lassen sich die wesentlichen Merkmale der erfindungsgemäßen Lösung wie folgt charakterisieren:

Die Erfindung sieht vor, bei einem Außenrückspiegel 1 mit einem Spiegelgehäuse 2 und einem Wischermotor 3 ein Wischblatt 7 oszillierend über die Spiegeloberfläche 6 zu bewegen, wobei die Wischermechanik 4 als kompakte Drehgelenkmechanik ausgebildet ist und vor Verschmutzung im Spiegelgehäuse 2, d.h. hinter der Spiegeloberfläche 6 und damit nicht sichtbar angeordnet ist. Die Wischermechanik 4 weist hierzu zwei L-förmige Schwenkarme 8 und 9 auf, welche parallel und drehachsenversetzt zueinander ortsfest an ihrem jeweiligen Knie 10 und 10' gelagert sind. Die beiden Schwenkarme 8 und 9 werden dabei an ihren antriebsseitigen Schenkeln 14 und 14' über eine Koppelstange 16 bzw. eine Pendelstange 17 angetrieben und sind an ihren wischerseitigen Schenkeln 11 bzw. 11' drehbar an einem inneren Parallelwischerarm 12 gelagert.

Durch die übereinander liegenden Schwenkarme 8 und 9 wird eine besonders kompakte Bauweise erreicht, welche es ermöglicht, die Wischermechanik 4 komplett im Spiegelgehäuse 2 anzuordnen und damit vor Verschmutzung und vor schneller Vereisung geschützt anzuordnen und gleichzeitig optisch unauffällig unterzubringen.

## Patentansprüche

1. Außenrückspiegel (1) für ein Kraftfahrzeug,
- mit einem Spiegelgehäuse (2) und einem Wischermotor (3),
- mit einem vom Wischermotor (3) über eine Wischermechanik (4) angetriebenen Wischerarm (5), der zur Reinigung einer Spiegeloberfläche (6) ein Wischblatt (7) trägt,
- wobei die Wischermechanik (4) eine im wesentlichen parallele Hin- und Herbewegung des Wischerblatts (7) erzeugt,
- wobei die Wischermechanik (4) einen ersten (8) und einen zweiten (9) L-förmigen Schwenkarm aufweist, welche jeweils an ihrem Knie (10, 10') ortsfest drehbar gelagert sind, **dadurch gekennzeichnet,**
- **dass** die beiden Schwenkarme (8, 9) an ihrem wischerseitigen Schenkel (11, 11') drehbar an einem inneren Parallelwischerarm (12) gelagert sind,
- **dass** am inneren Parallelwischerarm (12) ein äußerer Parallelwischerarm (13) angeordnet ist, welcher das Wischblatt (7) trägt,
- **dass** die beiden Schwenkarme (8, 9) an ihren antriebsseitigen Schenkeln (14, 14') vom Wischermotor (3) angetrieben sind.

2. Außenrückspiegel nach Anspruch 1,
**dadurch gekennzeichnet,**
**dass** die beiden L-förmigen Schwenkarme (8, 9) im wesentlichen derart parallel und drehachsenversetzt zueinander angeordnet sind, dass das Knie (10) des zweiten Schwenkarms (9) entlang des wischerseitigen Schenkels (11) des ersten Schwenkarmes (8) verschoben ist.

3. Außenrückspiegel nach Anspruch 1 oder 2,
**dadurch gekennzeichnet,**
**dass** zwischen dem inneren Parallelwischerarm (12) und dem äußeren Parallelwischerarm (13) ein Federgelenk (15) angeordnet ist, das so ausgebildet ist, dass es das Wischblatt (7) gegen die Spiegeloberfläche (6) drückt.

4. Außenrückspiegel nach einem der Ansprüche 1 bis 3,
**dadurch gekennzeichnet,**
- **dass** die beiden Schwenkarme (8, 9) an ihren antriebsseitigen Schenkeln (14, 14') über eine Koppelstange (16) miteinander gekoppelt sind,
- **dass** die Koppelstange (16) über eine weitere Pendelstange (17) mit dem Wischermotor (3) verbunden ist.

5. Außenrückspiegel nach einem der Ansprüche 1 bis 4,
**dadurch gekennzeichnet,**
**dass** einer der Parallelwischerarme (12, 13) die Spiegelfläche (6) randseitig umgreift.

6. Außenrückspiegel nach einem der Ansprüche 1 bis 5,
**dadurch gekennzeichnet,**
**dass** die Wischermechanik (4) am Spiegelgehäuse (2) befestigt ist.

7. Außenrückspiegel nach einem der Ansprüche 1 bis 5,
**dadurch gekennzeichnet,**
**dass** die Wischermechanik (4) an einem Träger befestigt ist, welcher gleichzeitig die Spiegelfläche (6) trägt.

8. Außenrückspiegel nach einem der Ansprüche 1 bis 7,
**dadurch gekennzeichnet,**
**dass** der Außenrückspiegel (1) elektrisch verstellbar ausgebildet ist.

9. Außenrückspiegel nach einem der Ansprüche 1 bis 8,
**dadurch gekennzeichnet,**
**dass** der Außenrückspiegel (1) beheizbar ausgebildet ist.

10. Außenrückspiegel nach einem der Ansprüche 1 bis 9,
**dadurch gekennzeichnet,**
**dass** der Außenrückspiegel (1) eine Wascheinrichtung aufweist.

11. Außenrückspiegel nach Anspruch 10,
**dadurch gekennzeichnet,**
**dass** die Wascheinrichtung so ausgebildet ist, dass sie nur in Bewegungsrichtung (18) vor das Wischblatt (7) Waschflüssigkeit auf die Spiegeloberfläche (6) spritzt.

## Claims

1. Exterior rearview mirror (1) for a motor vehicle,
- with a mirror housing (2) and a wiper motor (3),
- with a wiper arm (5) which is driven by the wiper motor (3) via a wiper mechanism (4) and bears a wiper blade (7) for cleaning a mirror surface (6),
- the wiper mechanism (4) generating an essentially parallel reciprocating movement of the wiper blade (7),
- the wiper mechanism (4) having a first L-shaped pivot arm (8) and a second L-shaped pivot arm (9) which are respectively mounted rotatably in a fixed position at their elbow (10, 10'), **characterized**
- **in that** the two pivot arms (8, 9) are mounted rotatably, at their limb (11, 11') on the wiper side, on an inner parallel wiper arm (12),
- **in that** an outer parallel wiper arm (13) which bears the wiper blade (7) is arranged on the inner parallel wiper arm (12),
- **in that** the two pivot arms (8, 9) are driven by the wiper motor (3) at their limbs (14, 14') on the drive side.

2. Exterior rearview mirror according to Claim 1, **characterized in that** the two L-shaped pivot arms (8, 9) are arranged essentially parallel and offset in terms of axis of rotation to each other in such a manner that the elbow (10) of the second pivot arm (9) is displaced along the limb (11), on the wiper side, of the first pivot arm (8).

3. Exterior rearview mirror according to Claim 1 or 2, **characterized in that** a spring joint (15) is arranged between the inner parallel wiper arm (12) and the outer parallel wiper arm (13), said spring joint being designed in such a manner that it presses the wiper blade (7) against the mirror surface (6).

4. Exterior rearview mirror according to one of Claims 1 to 3, **characterized**
- **in that** the two pivot arms (8, 9) are coupled to each other via a coupling rod (16) at their limbs (14, 14') on the drive side,
- **in that** the coupling rod (16) is connected to the wiper motor (3) via a further pendulum rod (17).

5. Exterior rearview mirror according to one of Claims 1 to 4, **characterized in that** one of the parallel wiper arms (12, 13) fits around the edge of the mirror surface (6).

6. Exterior rearview mirror according to one of Claims 1 to 5, **characterized in that** the wiper mechanism (4) is fastened to the mirror housing (2).

7. Exterior rearview mirror according to one of Claims 1 to 5, **characterized in that** the wiper mechanism (4) is fastened to a support which at the same time bears the mirror surface (6).

8. Exterior rearview mirror according to one of Claims 1 to 7, **characterized in that** the exterior rearview mirror (1) is designed such that it can be adjusted electrically.

9. Exterior rearview mirror according to one of Claims 1 to 8, **characterized in that** the exterior rearview mirror (1) is designed such that it can be heated.

10. Exterior rearview mirror according to one of Claims 1 to 9, **characterized in that** the exterior rearview mirror (1) has a washing device.

11. Exterior rearview mirror according to Claim 10, **characterized in that** the washing device is designed in such a manner that it only sprays washing liquid onto the mirror surface (6) in the direction of movement (18) in front of the wiper blade (7).

## Revendications

1. Rétroviseur extérieur (1) pour un véhicule,
➢ avec un boîtier de miroir (2) et un moteur d'essuie-glace (3),
➢ avec un bras d'essuie-glace (5) entraîné par le moteur d'essuie-glace (3) au moyen d'un mécanisme d'essuie-glace (4), qui porte un balai d'essuie-glace (7) pour le nettoyage d'une surface de miroir (6),
➢ le mécanisme d'essuie-glace (4) générant un mouvement d'allée et venue sensiblement parallèle du balai d'essuie-glace (7),
➢ le mécanisme d'essuie-glace (4) présentant un premier (8) et un second (9) bras pivotants en forme de L, lesquels sont montés chacun de façon rotative et au même endroit sur leur coude (10, 10'), **caractérisé en ce que**
➢ les deux bras pivotants (8, 9) sont montés sur un bras d'essuie-glace parallèle (12) intérieur de façon rotative sur leur branche (11, 11') côté essuie-glace,
➢ **en ce qu'**un bras d'essuie-glace (13) parallèle (13) extérieur, qui porte le balai d'essuie-glace (7), est disposé sur le bras d'essuie-glace (12) intérieur,
➢ **en ce que** les deux bras pivotants (8, 9) sont entraînés par le moteur d'essuie-glace (13) sur leurs branches (14, 14') côté entraînement.

2. Rétroviseur extérieur selon la revendication 1, **caractérisé en ce que** les deux bras pivotants (8, 9) en forme de L sont disposés sensiblement en parallèle et décalés par rapport à l'axe de rotation de telle sorte que le coude (10) du second bras pivotant (9) est décalé le long de la branche (11) côté essuie-glace du premier bras pivotant (8).

3. Rétroviseur extérieur selon la revendication 1 ou 2, **caractérisé en ce qu'**entre le bras d'essuie-glace parallèle (12) intérieur et le bras d'essuie-glace (13) extérieur est disposée une articulation à ressort (15) qui est conçue de telle sorte qu'elle appuie le balai d'essuie-glace (7) contre la surface du miroir (6).

4. Rétroviseur extérieur selon l'une quelconque des revendications 1 à 3, **caractérisé en ce que**
➢ les deux bras pivotants (8, 9) sont couplés entre eux sur leurs branches (14, 14') côté entraînement au moyen d'une tige de couplage (16),
➢ **en ce que** la tige de couplage (16) est reliée au moteur d'essuie-glace (3) au moyen d'une autre tige oscillante (17).

5. Rétroviseur extérieur selon l'une quelconque des revendications 1 à 4, **caractérisé en ce que** l'un des bras d'essuie-glace parallèles (12, 13) entoure côté bordure la surface de miroir (6),

6. Rétroviseur extérieur selon l'une quelconque des revendications 1 à 5, **caractérisé en ce que** le mécanisme d'essuie-glace (4) est fixé sur le corps de rétroviseur (2).

7. Rétroviseur extérieur selon l'une quelconque des revendications 1 à 5, **caractérisé en ce que** le mécanisme d'essuie-glace (4) est fixé sur un support qui porte en même temps la surface de miroir (6).

8. Rétroviseur extérieur selon l'une quelconque des revendications 1 à 7, **caractérisé en ce que** le rétroviseur extérieur (1) est conçu de façon réglable électriquement.

9. Rétroviseur extérieur selon l'une quelconque des revendications 1 à 8, **caractérisé en ce que** le rétroviseur extérieur (1) est conçu chauffant.

10. Rétroviseur extérieur selon l'une quelconque des revendications 1 à 9, **caractérisé en ce que** le rétroviseur extérieur (1) présente un dispositif de lavage.

11. Rétroviseur extérieur selon la revendication 10, **caractérisé en ce que** le dispositif de lavage est conçu de telle sorte qu'il pulvérise de liquide de lavage sur la surface de miroir (6) uniquement dans le sens de déplacement (18) devant le balai d'essuie-glace (7).
